# EUROPEAN PATENT APPLICATION

(11) **EP 3 425 524 A1**
(43) Date of publication of application: **09.01.2019**
(21) Application number: 17759144.3
(22) Date of filing: 20.02.2017
(51) Int. Cl.: G06F 17/30, G06F 11/30

(54) **CLOUD PLATFORM-BASED CLIENT APPLICATION DATA CALCULATION METHOD AND DEVICE**

(30) Priority: 01.03.2016 CN 201610115058
(71) Applicant: Alibaba Group Holding Limited, Grand Cayman (KY)
(72) Inventor: LI, Julei, Hangzhou Zhejiang 311121 (CN)
(74) Representative: Finnegan Europe LLP
(86) International application number: PCT/CN2017/074167
(87) International publication number: WO 2017/148293

(57) **Abstract**

The present application provides a cloud platform-based client application information statistical method and apparatus. The method includes: monitoring an event tracking log created by each client application by calling an event tracking software development kit, and extracting event tracking information from the event tracking log, wherein the event tracking log is created according to a predefined event tracking attribute, and the client application predefines the event tracking attribute by calling an application programming interface of the event tracking software development kit; merging the event tracking information according to at least one dimension; and querying and presenting the merged event tracking information according to a query request. In the present application, event tracking can be self-defined by using an API in an event tracking SDK, and because data related to a client application can be collected in a self-defined manner according to user needs in different application scenarios, the information collecting range of the client application is enlarged, and the utilization rate of the collection result is improved. The event tracking information read from the event tracking log is merged according to different dimensions, thus achieving classified statistics of the collection result.

## Description

### Technical Field

The present application relates to the field of cloud platform technologies, and more particularly to a cloud platform-based client application information statistical method and apparatus.

### Background Art

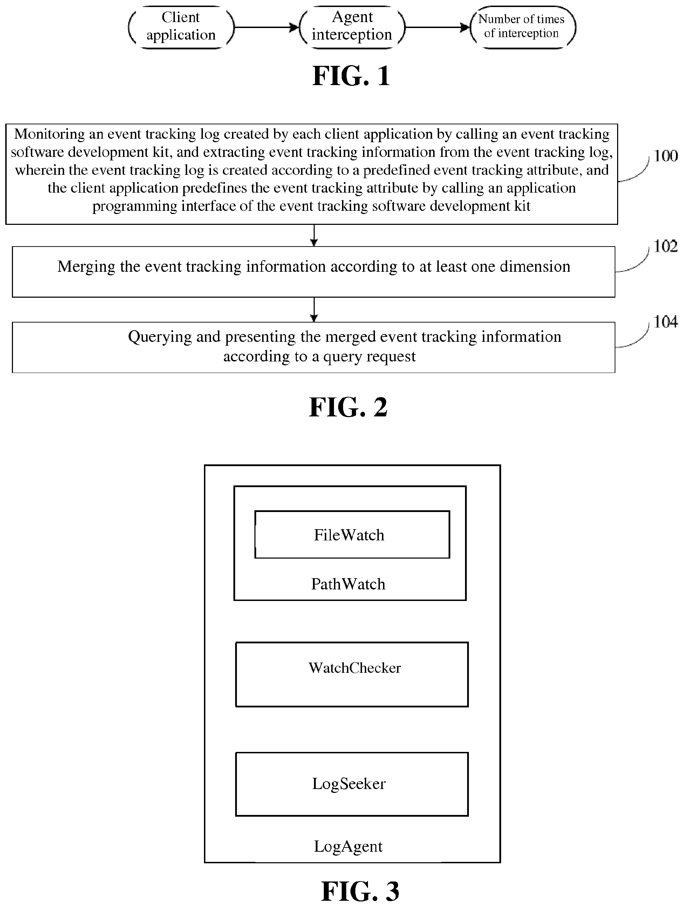

Currently, technical solutions for information statistics of client applications generally declare an Aspect Oriented Programming (AOP) interception by means of annotation using class methods or by means of a configuration file. A specific flowchart is as shown in FIG. 1. A client application needs to configure an agent through annotation or an AOP configuration file of Spring (an open framework). The agent intercepts an execution method of the client application, and after accessing an execution method that is configured as intercepted, records the accessed execution method and counts the number of times an execution method is intercepted.

In existing methods for collecting information of a client application through agent-based interception, an object intercepted by an agent is customized in advance for a certain scenario, and cannot be adjusted according to actual needs. In addition, the agent can intercept only an execution method of the client application but cannot intercept parameters or data related to the execution method. Therefore, the interception result obtained by the agent cannot be further utilized, leading to a low utilization rate of the agent interception result.

### Summary of the Invention

In view of the above problems, embodiments of the present application provide a cloud platform-based client application information statistical method and a corresponding cloud platform-based client application information statistical apparatus to overcome the above problems or at least partly solve the above problems.

To solve the above problems, the present application discloses a cloud platform-based client application information statistical method, including:
monitoring an event tracking log created by each client application by calling an event tracking software development kit, and extracting event tracking information from the event tracking log, wherein the event tracking log is created according to a predefined event tracking attribute, and the client application predefines the event tracking attribute by calling an application programming interface of the event tracking software development kit;
merging the event tracking information according to at least one dimension; and
querying and presenting the merged event tracking information according to a query request.

Preferably, the event tracking attribute includes an event tracking type and/or an event tracking keyword of the event tracking information, and the event tracking type includes an event tracking category or an event tracking subcategory to which the event tracking information belongs.

Preferably, the monitoring an event tracking log created by each client application by calling an event tracking software development kit includes:
monitoring a change state of a catalog of the event tracking log and/or the event tracking information; and
if the catalog and/or the event tracking information changes, determining that new event tracking information is added to the event tracking log.

Preferably, the extracting event tracking information from the event tracking log includes:
incrementally extracting the event tracking information from the event tracking log.

Preferably, after the extracting event tracking information from the event tracking log, the method further includes:
sending the event tracking information to a message oriented middleware, wherein the message oriented middleware is configured to transmit the event tracking information and control a transmission rate; and
before the merging the event tracking information according to at least one dimension, the method further includes:
   reading the event tracking information from the message oriented middleware.

Preferably, before the merging the event tracking information according to at least one dimension, the method further includes:
screening for event tracking information corresponding to the event tracking attribute.

Preferably, the merging the event tracking information according to at least one dimension includes:
merging the event tracking information according to an application dimension and/or a time dimension.

Preferably, the query request carries a query parameter input through a query interface; and the querying and presenting the merged event tracking information according to a query request includes:
querying and presenting the merged event tracking information according to the query parameter, the query parameter includes at least one of a time period, the event tracking attribute, and an application identifier of the client application.

The present application also discloses a cloud platform-based client application information statistical apparatus, including:
an event tracking log monitoring module, configured to monitor an event tracking log created by each client application by calling an event tracking software development kit;
an event tracking information extraction module, configured to extract event tracking information from the event tracking log, wherein the event tracking log is created according to a predefined event tracking attribute, and the client application predefines the event tracking attribute by calling an application programming interface of the event tracking software development kit;
an event tracking information merging module, configured to merge the event tracking information according to at least one dimension; and
an event tracking information presentation module, configured to query and present the merged event tracking information according to a query request.

Preferably, the event tracking attribute includes an event tracking type and/or an event tracking keyword of the event tracking information, and the event tracking type includes an event tracking category or an event tracking subcategory to which the event tracking information belongs.

Preferably, the event tracking log monitoring module is specifically configured to monitor a change state of a catalog of the event tracking log and/or the event tracking information; and if the catalog and/or the event tracking information changes, determine that new event tracking information is added to the event tracking log.

Preferably, the event tracking information reading module is specifically configured to incrementally extract the event tracking information from the event tracking log.

Preferably, the device further includes:
an event tracking information sending module, configured to send the event tracking information to a message oriented middleware after the event tracking information is extracted from the event tracking log, wherein the message oriented middleware is configured to transmit the event tracking information and control a transmission rate; and
the device further includes:
   an event tracking information extraction module, configured to read the event tracking information from the message oriented middleware before the event tracking information is merged according to the at least one dimension.

Preferably, the device further includes:
an event tracking information screening module, configured to find event tracking information corresponding to the event tracking attribute through screening before the event tracking information is merged according to the at least one dimension.

Preferably, the event tracking information merging module is specifically configured to merge the event tracking information according to an application dimension and/or a time dimension.

Preferably, the query request carries a query parameter input through a query interface; and
the event tracking information presentation module is specifically configured to query and present the merged event tracking information according to the query parameter, wherein the query parameter includes at least one of a time period, the event tracking attribute, and an application identifier of the client application.

The embodiments of the present application includes the following advantages:
In the embodiments of the present application, based on a cloud platform, an event tracking log created by a client application by calling an Application Programming Interface (API) in an event tracking Software Development Kit (SDK) is monitored, the event tracking information is read from the event tracking log, and event tracking information merged according to different dimensions is queried and presented according to a user's query request. In the embodiments of the present application, event tracking can be self-defined by using an API in an event tracking SDK, and because data related to a client application can be collected in a self-defined manner according to user needs in different application scenarios, the information collecting range of the client application is enlarged, and the utilization rate of the collection result is improved. In addition, the event tracking information read from the event tracking log is merged according to different dimensions, thus achieving classified statistics of the collection result of the client application.

### Brief Description of the Drawings

FIG. 1 is a schematic flowchart of information statistics of a client application in the prior art;
FIG. 2 is a flowchart of steps of an embodiment of a cloud platform-based client application information statistical method according to the present application;
FIG. 3 is a schematic structural diagram of LogAgent in an embodiment of a cloud platform-based client application information statistical method according to the present application;
FIG. 4 is a schematic structural diagram of a merging system in an embodiment of a cloud platform-based client application information statistical method according to the present application;
FIG. 5 is a schematic diagram illustrating the relationship between a message oriented middleware, JStorm and a merging system in an embodiment of a cloud platform-based client application information statistical method according to the present application;
FIG. 6 is a flowchart of steps of an embodiment of another cloud platform-based client application information statistical method according to the present application;
FIG. 7 is a schematic logical diagram of a system structure in an embodiment of a cloud platform-based client application information statistical method according to the present application; and
FIG. 8 is a structural block diagram of an embodiment of a cloud platform-based client application information statistical apparatus according to the present application.

### Detailed Description

To make the above objectives, features and advantages of the present application more comprehensible, the present application is described in further detail below with reference to the accompanying drawings and specific implementations.

One of the core ideas of the embodiments of the present application is to provide a cloud platform-based client application information statistical method, which can be applied to a server terminal. The server terminal provides an event tracking SDK. The client application call an API in the event tracking SDK to self-define event tracking. The server terminal systematically monitors an event tracking log, collects the event tracking log by using an intelligent agent, automatically merges messages in the event tracking log in real time, and queries and presents the merging result, thus implementing the information collection and statistics of the client application.

Referring to FIG. 2, a flowchart of steps of an embodiment of a cloud platform-based client application information statistical method according to the present application is shown. The method may specifically include the following steps:
Step 100, monitoring an event tracking log created by each client application by calling an event tracking software development kit, and extracting event tracking information from the event tracking log, wherein the event tracking log is created according to a predefined event tracking attribute, and the client application predefines the event tracking attribute by calling an application programming interface of the event tracking software development kit.

The event tracking software development kit SDK is provided by the server terminal to the client application. The event tracking software development kit generates an event tracking log. The event tracking log is a particular log file used for recording event tracking information collected. In particular, an event tracking attribute is self-defined in the event tracking software development kit, and by using the self-defined event tracking attribute, the event tracking software development kit stores every event tracking message related to the self-defined event tracking attribute during running of the client application into the event tracking log.

The event tracking attribute may be predefined in the event tracking software development kit or may be self-defined by using the client application. For example, the event tracking SDK may be provided in the form of a jar package to the client application for use. A java client application needs to rely on the jar package of the event tracking SDK to self-define event tracking. Specifically, the client application may access an application programming interface API provided in the event tracking SDK to configure the event tracking attribute used for creating the event tracking log, so as to collect event tracking information according to the event tracking attribute. Because data related to a client application can be collected in a self-defined manner according to user needs in different application scenarios, the information collecting range of the client application is enlarged, and the utilization rate of the collection result is improved.

In specific implementation, information such as the name and storage path of the event tracking log may also be predefined by using the SDK.

The event tracking attribute may include at least one of an event tracking type and an event tracking keyword.

The event tracking attribute may include the event tracking type. For example, if a load test needs to be carried out for the client application deployed in the cloud platform and the user wants to know the load status of the entire cloud platform system in an application dimension, user queries may be performed by using a self-defined event tracking type, and each recorded user query may be acquired according to the event tracking type, so as to further calculate a maximum QPS (queries per second) of the cloud platform system according to the user queries.

The event tracking type may also be classified, for example, the event tracking type may be classified as an event tracking category (category) or an event tracking subcategory (subcategory) to which the event tracking information belongs. That is to say, classified statistics of the acquired event tracking information is implemented by using a parent-child relationship defined by the event tracking type. For example, when multiple execution methods of a client application for a database call need to be analyzed, a event tracking category may be defined for the database call, and a event tracking subcategory may be defined for each specific execution method.

The event tracking attribute may include the event tracking keyword. The client application defines an event tracking keyword required for collection, and further acquires event tracking information relates to the event tracking keyword. For example, when multiple running parameters of a client application need to be analyzed, event tracking keywords of the event tracking SDK may be defined respectively to distinguish the running parameters. The event tracking keyword may be defined together with the event tracking type. For example, a client application is deployed on 10 virtual machines in a cloud environment, and event tracking keywords of the event tracking SDK may be defined to distinguish running parameters such as cpu, memory, and disk of each virtual machine. Specifically, an event tracking type is defined for each virtual machine, and event tracking keywords under the event tracking type are defined for running parameters of each virtual machine.

The event tracking attribute may further include call time consumption and a call success identifier for a target object, to respectively indicate a time required for calling a target object (for example, an execution method) of the client application and whether the target object is successfully called. The call time consumption and the call success/failure information are recorded in the event tracking log for use during analysis.

Specifically, the name of the API is logStat, and at least one of the event tracking type, the event tracking subcategory, the event tracking keyword, the call time consumption, and the call success/failure information may be defined. When the event tracking type and the event tracking subcategory are defined, the event tracking SDK records that the result is logStat (String category, subCategory); when the event tracking type, the event tracking subcategory and the call time consumption are defined, the event tracking SDK records that the result is logStat (String category, subCategory, Long response Time); when the event tracking type, the event tracking keyword, the call time consumption and the call success/failure information are defined, the event tracking SDK records that the result is logStat (String category, String keyWord, Long responseTime, Boolean success).

Collection of parameters related to an execution method is used as an example for description. It is assumed that the specific class of the API provided by SDK is MonitorService, the name of the API is MonitorServicelogStat, and in the client application, there exist operations on a MySQL database, with method names being insertMethod and updateMethod. The number of calls per minute during running of the application needs to be calculated for the two methods. When the event tracking SDK is used to record that the method is call once, it is assumed that the category is set to MySQL and the subCategories are defined as Insert and Update. For event tracking of the method insertMethod, for example:
If the method call time consumption does not need to be recorded, the event tracking SDK records that the result is MonitorService.logStat("MySQL","Insert").

If the time consumption of the execution of insertMethod needs to be recorded, the execution time of the method insertMethod can be obtained by subtracting the start time from the end time of the method insertMethod. Assuming the time consumption is 10 ms, the result recorded by the event tracking SDK is MonitorService.logStat("MySQL","Insert","10").

If whether the call is successful needs to be recorded, the recorded result is MonitorService.logStat("MySQL","Insert","10", "true") indicating call success, or MonitorService.logStat("MySQL","Insert","10", "false") indicating call failure. This also applies to event tracking of updateMethod.

Monitoring the event tracking log may be monitoring a change in the event tracking log to find addition of new event tracking information. For an event tracking log having a log catalog, a change in the catalog of the event tracking log may be monitored. When the catalog changes, it is determined that new event tracking information is added. Alternatively, a change in the event tracking information is monitored, and when the event tracking information changes, it is determined that new event tracking information is added. The two methods may be used in combination for monitoring.

In step 100, LogAgent may be used to monitor the event tracking log. LogAgent is configured to monitor the event tracking log, and may specifically include the following modules: PathWatch, configured to monitor the change in the catalog of the event tracking log; FileWatch, configured to monitor the change in the event tracking information of the event tracking log; WatchChecker, configured to set a limit on the number of pieces of event tracking information monitored in the event tracking log; and LogSeeker, configured to incrementally read the event tracking information from the event tracking log. In the present application, monitoring the event tracking log by using LogAgent may specifically be monitoring a change state of the catalog of the event tracking log by using PathWatch, where if the catalog changes, it indicates that new event tracking information is added to the event tracking log. Monitoring the event tracking log not only includes monitoring the catalog of the event tracking log, but also includes monitoring the event tracking information in the event tracking log by using FileWatch on the basis of monitoring the change state of the catalog of the event tracking log by using PathWatch. In the monitoring process, WatchChecker may further be used to set a limit on the number of pieces of event tracking information monitored. After FileWatch detects a change in the event tracking information in the event tracking log, LogSeeker is used to incrementally read the event tracking information. A schematic structural diagram of LogAgent is as shown in FIG. 3.

In step 100, reading the event tracking information from the event tracking log may specifically be incrementally extracting the event tracking information from the event tracking log. For example, the event tracking log is an xx.log file in which each piece of event tracking information is sequentially arranged on a per-segment basis. Each time a segment of content is added to the event tracking log, it is considered that a piece of event tracking information is added. When the event tracking information is read, the event tracking information that has already been read is ignored, and only the newly added event tracking information is read. Because it does not need to read the entire event tracking log, the amount of data processed can be reduced.

In a preferred embodiment of the present application, after the event tracking information is read from the event tracking log in step 100, the read event tracking information may further be sent to the message oriented middleware. The message oriented middleware may be MetaQ (queuing model message oriented middleware) or kafka (distributed subscription message publishing system). The message oriented middleware is configured to transmit the event tracking information, and control the transmission rate of the event tracking information by using a message stacking function of the message oriented middleware. Correspondingly, before the event tracking information is processed, the event tracking information needs to be extracted from the message oriented middleware.

Step 102, merging the event tracking information according to at least one dimension.

After the event tracking information is obtained, the event tracking information may be merged according to at least one dimension, thus implementing classified statistics of the collection result of the client application. For example, the event tracking information is merged according to an application dimension and a time dimension to finally provide merged information of a client application with a smallest granularity of 1 minute, that is, merged information of a client application with the smallest unit in the time dimension being 1 minute.

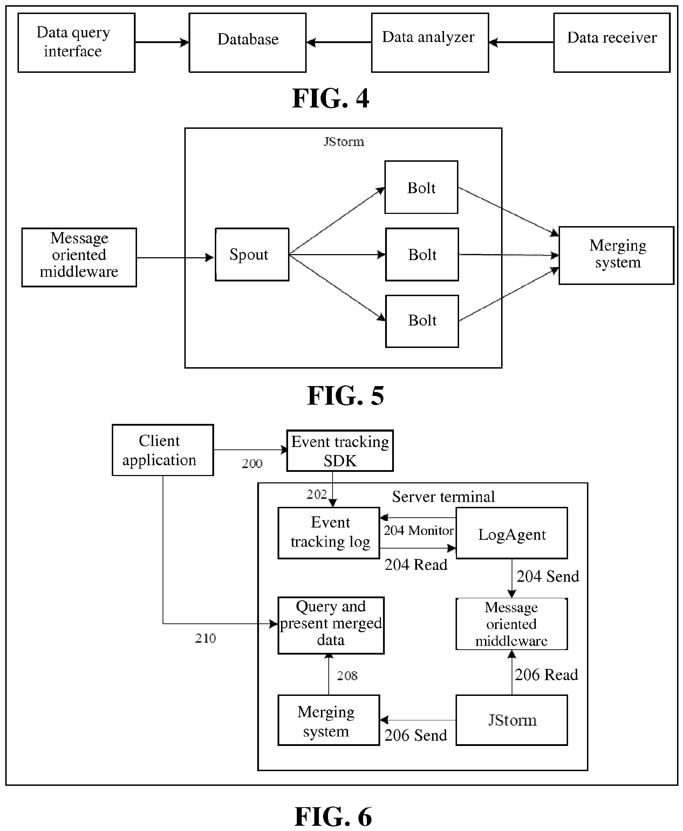

A merging system for merging the event tracking information in the event tracking log may be deployed in advance in the server terminal. The operation of merging the event tracking information may be executed in the merging system. The structure of the merging system is as shown in FIG. 4. the merging system may use a data receiver to receive merged information, use a data analyzer to analyze the merged information, and store the merged information to a database. The database is configured to store the analyzed merged information, and may further provides a data query interface for querying merged information. The use of the merging system to merge the data can ensuring the real-timeliness and accuracy of data processing.

Merging the event tracking information according to the time dimension may specifically be merging multiple pieces of event tracking information belonging to the same time point or time period according to a time point or time period corresponding to each piece of event tracking information, to serve as merged data at the same time point or within the same time period. Merging the event tracking information according to the application dimension may specifically be merging multiple pieces of event tracking information belonging to the same client application according to an identifier of a client application corresponding to each piece of event tracking information, to serve as merged information of the same client application. The multiple pieces of event tracking information may be event tracking information of the same client application or different client applications.

The event tracking log also includes some redundant information in addition to the useful event tracking information. Therefore, In a preferred embodiment of the present application, before step 102, the read event tracking information may further be cleaned and filtered. Some meaningless characters or tags such as separators can be deleted by cleaning, and useful event tracking information can be extracted from the remaining information by filtering. Specifically, screening may be performed according to at least one of the event tracking type and the event tracking keyword in the event tracking attribute.

Specifically, a real-time computing framework may be used to read the event tracking information and clean and filter the event tracking information. For example, a JStorm real-time computing framework may be used. JStorm is used to extract event tracking information corresponding to the event tracking attribute. JStorm is a real-time computing framework developed by making continuous improvements on Storm in network input/output, thread model, resource scheduling, applicability and stability, and has such advantages as higher running stability, more powerful scheduling function and higher execution efficiency over Storm. As shown in FIG. 5, a schematic diagram illustrating the relationship between a message oriented middleware, JStorm and a merging system is shown. JStorm acquires event tracking information from the message oriented middleware. JStorm cleans the event tracking information using Spout and filters the event tracking information using bolt, and sends the cleaned and filtered event tracking information corresponding to the event tracking keyword to the merging system.

Step 104, querying and presenting the merged event tracking information according to a query request.

The server terminal executing the present application may provide an interface for the user to query the event tracking information. Specifically, the above merging system may provides an interface. The user may access the interface to send a query request for event tracking information. After receiving the query request, the server terminal queries the required event tracking information and presents same to the user.

Specifically, the user may access the interface to input a query parameter representing required information; the server terminal receives a query request carrying the query parameter, and further queries corresponding event tracking information according to the query parameter. The query parameter may include at least one of a time period, the event tracking attribute, and an application identifier of the client application. For example, the query parameter includes the time period, the event tracking attribute and the application identifier, and according to the query parameter, event tracking information corresponding to a certain keyword of a certain application within a certain time period can be queried in the merging system. The query result may be presented in various forms such as graph, document, and trend chart. For example, a visual curve may be generated for event tracking information that is merged according to the time dimension, and the curve may be updated according to new event tracking data acquired in real time.

In conclusion, in the technical solution of this embodiment of the present application, an event tracking log created by a client application by calling an API in an event tracking SDK is monitored, the event tracking information is read from the event tracking log, and event tracking information merged according to different dimensions is queried and presented according to a user's query request. In the embodiments of the present application, event tracking can be self-defined by using an API in an event tracking SDK, and because data related to a client application can be collected in a self-defined manner according to user needs in different application scenarios, the information collecting range of the client application is enlarged, and the utilization rate of the collection result is improved. In addition, the event tracking information read from the event tracking log is merged according to different dimensions, thus achieving classified statistics of the collection result of the client application. Moreover, the use of the message oriented middleware to transmit the event tracking information and control the transmission rate can alleviate the load of the merging system.

Referring to FIG. 6, a flowchart of steps of an embodiment of another cloud platform-based client application information statistical method according to the present application is shown. The method may specifically include the following steps:
Step 200, a client application calls an event tracking SDK provided by a server terminal to self-define event tracking.

Step 202, the event tracking SDK creates an event tracking log.

Step 204, LogAgent monitors the event tracking log, incrementally reads event tracking information from the event tracking log, and sends the event tracking information to a message oriented middleware.

Step 206, JStorm reads the event tracking information from the message oriented middleware, performs real-time computing on the event tracking information, and sends the computed event tracking information to a merging system.

Step 208, the merging system merges the event tracking information according to an application dimension and/or a time dimension.

Step 210, the server terminal queries and presents the merged event tracking information according to a query request.

In conclusion, the client application in the embodiments of the present application can self-define event tracking by using an API in an event tracking SDK, and because data related to a client application can be collected in a self-defined manner according to user needs in different application scenarios, the information collecting range of the client application is enlarged, and the utilization rate of the collection result is improved. In addition, the event tracking information read from the event tracking log is merged according to different dimensions, thus achieving classified statistics of the collection result of the client application.

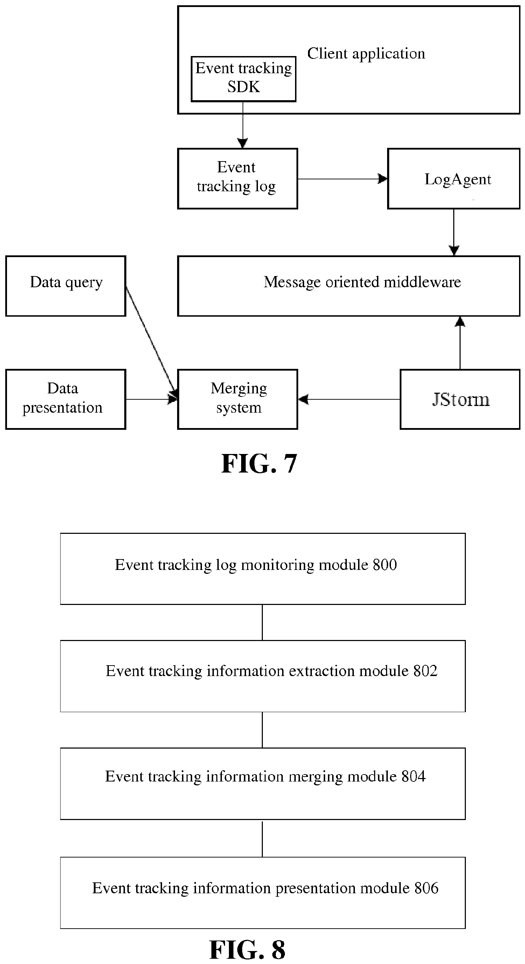

Referring to FIG. 7, a schematic logical diagram of a system structure in an embodiment of a cloud platform-based client application information statistical method according to the present application is shown. A client application calls an API in an event tracking SDK to self-define event tracking, and an event tracking log is created; LogAgent reads event tracking information from the event tracking log and sends same to a message oriented middleware; JStorm reads in real time the event tracking information from the message oriented middleware, performs cleaning and filtering, and sends the cleaned and filtered event tracking information to a merging system; the merging system merges the received event tracking information according to at least one dimension, and provides a data query function and a data presentation function externally.

In conclusion, in the technical solution of this embodiment of the present application, an event tracking log created by a client application by calling an API in an event tracking SDK is monitored, the event tracking information is read from the event tracking log, and event tracking information merged according to different dimensions is queried and presented according to a user's query request. In the embodiments of the present application, event tracking can be self-defined by using an API in an event tracking SDK, and because data related to a client application can be collected in a self-defined manner according to user needs in different application scenarios, the information collecting range of the client application is enlarged, and the utilization rate of the collection result is improved. In addition, the event tracking information read from the event tracking log is merged according to different dimensions, thus achieving classified statistics of the collection result of the client application.

It should be noted that for simplicity, the method embodiment are described as a series of action combinations, but it should be understood by those skilled in the art that the embodiments of the present application are not limited to the described order of actions, because some steps may be performed in a different order or simultaneously according to the embodiments of the present application. It should also be understood by those skilled in the art that the embodiments described in the specification are all preferred embodiments, and the actions involved in these embodiments may not be necessary for the embodiments of the present application.

Referring to FIG. 8, a structural block diagram of an embodiment of a cloud platform-based client application information statistical apparatus according to the present application is shown. The apparatus may specifically include the following modules:
an event tracking log monitoring module 800, configured to monitor an event tracking log created by each client application by calling an event tracking software development kit;
an event tracking information extraction module 802, configured to extract event tracking information from the event tracking log, wherein the event tracking log is created according to a predefined event tracking attribute, and the client application predefines the event tracking attribute by calling an application programming interface of the event tracking software development kit;
an event tracking information merging module 804, configured to merge the event tracking information according to at least one dimension; and
an event tracking information presentation module 806, configured to query and present the merged event tracking information according to a query request.

In an embodiment of the present application, preferably, the event tracking attribute includes an event tracking type and/or an event tracking keyword of the event tracking information, and the event tracking type includes an event tracking category or an event tracking subcategory to which the event tracking information belongs.

In an embodiment of the present application, preferably, the event tracking log monitoring module is specifically configured to monitor a change state of a catalog of the event tracking log and/or the event tracking information; and if the catalog and/or the event tracking information changes, determine that new event tracking information is added to the event tracking log.

In an embodiment of the present application, preferably, the event tracking information reading module is specifically configured to incrementally extract the event tracking information from the event tracking log.

In an embodiment of the present application, preferably, the device further includes:
an event tracking information sending module, configured to send the event tracking information to a message oriented middleware after the event tracking information is extracted from the event tracking log, wherein the message oriented middleware is configured to transmit the event tracking information and control a transmission rate; and
the device further includes:
   an event tracking information extraction module, configured to read the event tracking information from the message oriented middleware before the event tracking information is merged according to the at least one dimension.

In an embodiment of the present application, preferably, the device further includes:
an event tracking information screening module, configured to find event tracking information corresponding to the event tracking attribute through screening before the event tracking information is merged according to the at least one dimension.

In an embodiment of the present application, preferably, the event tracking information merging module is specifically configured to merge the event tracking information according to an application dimension and/or a time dimension.

In an embodiment of the present application, preferably, the query request carries a query parameter input through a query interface; and
the event tracking information presentation module is specifically configured to query and present the merged event tracking information according to the query parameter, wherein the query parameter includes at least one of a time period, the event tracking attribute, and an application identifier of the client application.

In conclusion, in the technical solutions of the embodiments of the present application, an event tracking log created by a client application by calling an API in an event tracking SDK is monitored, the event tracking information is read from the event tracking log, and event tracking information merged according to different dimensions is queried and presented according to a user's query request. In the embodiments of the present application, event tracking can be self-defined by using an API in an event tracking SDK, and because data related to a client application can be collected in a self-defined manner according to user needs in different application scenarios, the information collecting range of the client application is enlarged, and the utilization rate of the collection result is improved. In addition, the event tracking information read from the event tracking log is merged according to different dimensions, thus achieving classified statistics of the collection result of the client application.

The apparatus embodiment is basically similar to the method embodiment and therefore is described briefly, and for the relevant part, reference may be made to the part of the description of the method embodiment.

The embodiments in the specification are described in a progressive manner. Each embodiment focuses on differences from other embodiments. For same or similar parts in the embodiments, reference may be made to each other.

As will be appreciated by those skilled in the art, the embodiments of the present application may be embodied as a method, a system, or a computer program product. Accordingly, the present application may use the form of an entirely hardware embodiment, an entirely software embodiment or an embodiment combining software and hardware aspects. Furthermore, the embodiments of the present application may use the form of a computer program product implemented on one or more computer-usable storage media (including but not limited to magnetic disk memories, CD-ROMs, optical memories, etc.) including computer-usable program code.

In a typical configuration, a computation device includes one or more central processing units (CPUs), input/output interfaces, network interfaces, and memories. The memory may include the following forms of a computer readable medium: a volatile memory, a random access memory (RAM) and/or a non-volatile memory, for example, a read-only memory (ROM) or flash RAM. The memory is an example of the computer readable medium. The computer readable medium includes volatile and non-volatile, mobile and non-mobile media, and can use any method or technology to store information. The information may be a computer readable instruction, a data structure, a module of a program or other data. Examples of storage media of the computer include, but are not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storage, a cassette tape, a tape disk storage or other magnetic storage devices, or any other non-transmission media, which can be used for storing computer accessible information. According to the definition herein, the computer readable medium does not include transitory computer readable media(transitory media), for example, a modulated data signal and carrier.

The embodiments of the present application are described with reference to flowcharts and/or block diagrams of the method, terminal device (system) and computer program product in the embodiments of the present application. It should be understood that computer program instructions can implement each process and/or block in the flowcharts and/or block diagrams and a combination of processes and/or blocks in the flowcharts and/or block diagrams. These computer program instructions may be provided to a general-purpose computer, a special-purpose computer, an embedded processor or a processor of another programmable data processing device to generate a machine, so that an apparatus configured to implement functions specified in one or more processes in the flowcharts and/or one or more blocks in the block diagrams is generated by using instructions executed by the general-purpose computer or the processor of another programmable data processing device.

These computer program instructions may also be stored in a computer readable memory that can guide a computer or another programmable data processing device to work in a specified manner, so that the instructions stored in the computer readable memory generate a product including an instruction apparatus, where the instruction apparatus implements functions specified in one or more processes in the flowcharts and/or one or more blocks in the block diagrams.

These computer program instructions may also be loaded into a computer or another programmable data processing device, so that a series of operation steps are performed on the computer or another programmable data processing device to generate processing implemented by a computer, and instructions executed on the computer or another programmable data processing device provide steps for implementing functions specified in one or more processes in the flowcharts and/or one or more blocks in the block diagrams.

Although preferred embodiments of the present invention have been described, those skilled in the art can make additional variations or modifications to the embodiments after learning the basic inventive concept. Therefore, the appended claims should be construed as including the preferred embodiments and all variations and modifications that fall within the scope of the embodiments of the present invention.

Finally, it should be further noted that as used herein, relational terms such as first and second are merely used for distinguishing one entity or operation from another entity or operation, and do not necessarily require or imply any actual relationship or sequence between entities or operations. In addition, the terms "include", "comprise" or any other variation thereof, are intended to cover a non-exclusive inclusion, such that a process, method, article, or device that includes a list of elements does not include only those elements but may include other elements not expressly listed or inherent to such process, method, article, or device. An element proceeded by "a", "an", or the like does not, without more constraints, preclude the existence of additional identical elements in the process, method, article, or device that includes the element.

The cloud platform-based client application information statistical method and apparatus provided by the present application are described in detail above. Specific examples are used in the specification to elaborate the principle and implementation of the present application. However, the descriptions of the foregoing embodiments are merely used to facilitate the understanding of the method and core idea of the present application. Those of ordinary skill in the art can make modifications to the specific implementation and the application scope according to the idea of the present application. Therefore, the content of the specification should not be construed as limiting the present application.

## Claims

1. A cloud platform-based client application information statistical method, including:
monitoring an event tracking log created by each client application by calling an event tracking software development kit, and extracting event tracking information from the event tracking log, wherein the event tracking log is created according to a predefined event tracking attribute, and the client application predefines the event tracking attribute by calling an application programming interface of the event tracking software development kit;
merging the event tracking information according to at least one dimension; and
querying and presenting the merged event tracking information according to a query request.

2. The method according to claim 1, wherein the event tracking attribute includes an event tracking type and/or an event tracking keyword of the event tracking information, and the event tracking type includes an event tracking category or an event tracking subcategory to which the event tracking information belongs.

3. The method according to claim 1, wherein the monitoring an event tracking log created by each client application by calling an event tracking software development kit includes:
monitoring a change state of a catalog of the event tracking log and/or the event tracking information; and
if the catalog and/or the event tracking information changes, determining that new event tracking information is added to the event tracking log.

4. The method according to claim 1, wherein the extracting event tracking information from the event tracking log includes:
incrementally extracting the event tracking information from the event tracking log.

5. The method according to claim 1, wherein after the extracting event tracking information from the event tracking log, the method further includes:
sending the event tracking information to a message oriented middleware, wherein the message oriented middleware is configured to transmit the event tracking information and control a transmission rate; and
before the merging the event tracking information according to at least one dimension, the method further includes:
reading the event tracking information from the message oriented middleware.

6. The method according to claim 1, wherein before the merging the event tracking information according to at least one dimension, the method further includes:
finding event tracking information corresponding to the event tracking attribute through screening.

7. The method according to claim 1, wherein the merging the event tracking information according to at least one dimension includes:
merging the event tracking information according to an application dimension and/or a time dimension.

8. The method according to claim 1, wherein the query request carries a query parameter input through a query interface; and
the querying and presenting the merged event tracking information according to a query request includes:
querying and presenting the merged event tracking information according to the query parameter, wherein the query parameter includes at least one of a time period, the event tracking attribute, and an application identifier of the client application.

9. A cloud platform-based client application information statistical apparatus, including:
an event tracking log monitoring module, configured to monitor an event tracking log created by each client application by calling an event tracking software development kit;
an event tracking information extraction module, configured to extract event tracking information from the event tracking log, wherein the event tracking log is created according to a predefined event tracking attribute, and the client application predefines the event tracking attribute by calling an application programming interface of the event tracking software development kit;
an event tracking information merging module, configured to merge the event tracking information according to at least one dimension; and
an event tracking information presentation module, configured to query and present the merged event tracking information according to a query request.

10. The device according to claim 9, wherein the event tracking attribute includes an event tracking type and/or an event tracking keyword of the event tracking information, and the event tracking type includes an event tracking category or an event tracking subcategory to which the event tracking information belongs.

11. The device according to claim 9, wherein the event tracking log monitoring module is specifically configured to monitor a change state of a catalog of the event tracking log and/or the event tracking information; and if the catalog and/or the event tracking information changes, determine that new event tracking information is added to the event tracking log.

12. The device according to claim 9, wherein the event tracking information reading module is specifically configured to incrementally extract the event tracking information from the event tracking log.

13. The device according to claim 9, wherein the device further includes:
an event tracking information sending module, configured to send the event tracking information to a message oriented middleware after the event tracking information is extracted from the event tracking log, wherein the message oriented middleware is configured to transmit the event tracking information and control a transmission rate; and
the device further includes:
an event tracking information extraction module, configured to read the event tracking information from the message oriented middleware before the event tracking information is merged according to the at least one dimension.

14. The device according to claim 9, wherein the device further includes:
an event tracking information screening module, configured to find event tracking information corresponding to the event tracking attribute through screening before the event tracking information is merged according to the at least one dimension.

15. The device according to claim 9, wherein the event tracking information merging module is specifically configured to merge the event tracking information according to an application dimension and/or a time dimension.

16. The device according to claim 9, wherein the query request carries a query parameter input through a query interface; and
the event tracking information presentation module is specifically configured to query and present the merged event tracking information according to the query parameter, wherein the query parameter includes at least one of a time period, the event tracking attribute, and an application identifier of the client application.
